# EUROPEAN PATENT APPLICATION

(11) **EP 3 305 239 A1**
(43) Date of publication of application: **11.04.2018**
(21) Application number: 17191769.3
(22) Date of filing: 19.09.2017
(51) Int. Cl.: A61C 5/50, A61C 5/55, A61C 5/62, B05C 17/005, B05C 17/01, A61C 5/66

(54) **DUAL FUNCTIONALITY ENDO-INSTRUMENTS AND METHODS OF USING THE SAME**

(30) Priority: 10.10.2016 US 201615289366
(71) Applicant: Kerr Corporation, Orange, CA 92867 (US)
(72) Inventor: CORA, Sorin, Orange, CA California 92867 (US)
(74) Representative: Korenberg, Alexander Tal

(57) **Abstract**

Apparatuses and methods for extruding a dental filling material. The dental filling material may be extruded into a tooth. The extrusion is accomplished by harnessing a combination of motor power (such as from an electrical motor) and spring loaded power. This combination overcomes the shortcomings of each of these power sources. In addition, because this combination significantly reduces battery power requirements, it allows for more thermal heating, down-packing, and obturation to be performed than would otherwise be possible.

## Description

### FIELD OF TECHNOLOGY

This disclosure relates to apparatuses and methods useful in dental restoration treatments such as root canals.

### BACKGROUND

A root canal (RC) is a restorative dental procedure for treating an infected tooth. In a RC, infected pulp is removed from the tooth. After this removal, the canals or pulp chambers in the tooth are then cleaned and disinfected. These canals or pulp chambers are then filled with a dental filling material, most commonly gutta percha. A crown or restorative may be placed over the RC site to protect it and facilitate normal tooth function.

A crucial element of a successful RC is effective obturation of the treated tooth, typically by the largely contiguous deployment of the dental filling material. Obturation is the process of obstructing entry into the interior of the tooth of any unwanted material such as microorganisms or tissue fluids or matter. Good obturation is needed for a treated tooth to remain healthy for extended periods of time after the RC. Thus there is clear utility in novel apparatuses and methods for properly obturating treated teeth.

The art described in this section is not intended to constitute an admission that any patent, publication or other information referred to herein is "prior art" with respect to this invention, unless specifically designated as such. In addition, this section should not be construed to mean that a search has been made or that no other pertinent information as defined in 37 CFR § 1.56(a) exists.

### BRIEF SUMMARY OF THE INVENTION

To satisfy the long-felt but unsolved needs identified above, at least one embodiment is directed towards an apparatus. The apparatus comprises an extrusion piston which is preferably co-axial with a reservoir. The piston is constructed and arranged to push a mass of material from within the reservoir into a dispenser. Motive force is provided to the piston in part by a motor driven actuator in communication with the piston. Also the piston is in part driven by a pre-loaded spring in communication with the piston.

Both the pre-loaded spring and the motor driven actuator may be constructed and arranged to impart mechanical force, at least in part, coaxial to an axis. The motor may be one selected from the group consisting of: electrical motor, wired electrical motor, cordless electrical motor, battery powered electrical motor, rechargeable battery powered electrical motor, and any combination thereof. The motor and the reservoir may be located in different elements of the apparatus releaseably engaged to each other.

A mass of dental filling material may be positioned between the piston and the dispenser. The apparatus may further include a thermal element constructed and arranged to heat the dental filling material. The heating may be to one or more pre-determined temperatures. The mass, or a portion of the mass, and the forces may be coordinated so that the mass is not extruded until one or more pre-determined temperatures are reached. The dispenser may be a syringe cylinder through which the material is extruded.

The apparatus may further comprise a data output. The output is in informational communication with at least one item selected from the group consisting of: the reservoir, the spring, the motor driven actuator, a battery, a down-pack tip, and any combination thereof. The output may be constructed and arranged to display one or more properties of the one or more items that vary as the piston applies mechanical force. This may be accomplished through the positioning of sensors, resistors, conductors, thermometers, scales, or any other measuring device known in the art of the relevant item.

The apparatus may further comprise a down-pack tip located at any at any position along the apparatus. The down-pack tip, a heating element, and/or the motor may share at least one common power source.

The apparatus may further comprise a control element for the thermal element. The thermal element may be constructed and arranged to have settings for heating a mass of dental filling material at one or more pre-determined temperatures. The down-pack tip may also be constructed and arranged to vibrate to one or more frequencies. The motor driven actuator may also be constructed and arranged to have settings for applying pressing forces at one or more levels of intensity. The control element may be constructed and arranged to allow an operator to select the specific setting of one or more of the thermal element, down-pack tip, and the motor driven actuator.

At least one embodiment is directed towards a method of extrusion. The method comprises the steps of extruding a plastic mass through a dispenser via an overall pressing force applied by a piston. The overall pressing force is a combination of at least two forces. The two forces may include an actuator supplied force and a spring supplied force. The method of extrusion may be applied to apply a dental filling material to a tooth, for example in a root canal or other procedure.

### BRIEF DESCRIPTION OF THE DRAWINGS

FIG. 1 is a graph illustrating the substantially constant nature of the overall extrusion pressure required to extrude a plastic material.
**FIG. 2** is a graph illustrating the functioning characteristic of a compression helical spring.
**FIG. 3** is a graph illustrating the amount of work a motor must perform to extrude material is greatly reduced by the presence of a spring.
**FIG. 4** is an illustration of a side view of an extrusion apparatus.
**FIG. 5** is a partial cross sectional illustration of the main subassemblies of an extrusion apparatus.
**FIG. 6** is a magnification of a cross sectional illustration showing the mechanical subassemblies of an extrusion apparatus.
**FIG. 7** is a cross sectional illustration of the piston working assemblies of an extrusion apparatus.

For the purposes of this disclosure, like reference numerals in the figures shall refer to like features unless otherwise indicated. The drawings are only an exemplification of the principles of the invention and are not intended to limit the invention to the particular embodiments illustrated.

### DETAILED DESCRIPTION OF THE INVENTION

At least one embodiment is an endodontic instrument for the plastic extrusion of dental filling material. The overall work employed by the instrument to extrude the material is made up in part by the work of a motor and in part by the energy stored in a deformed spring.

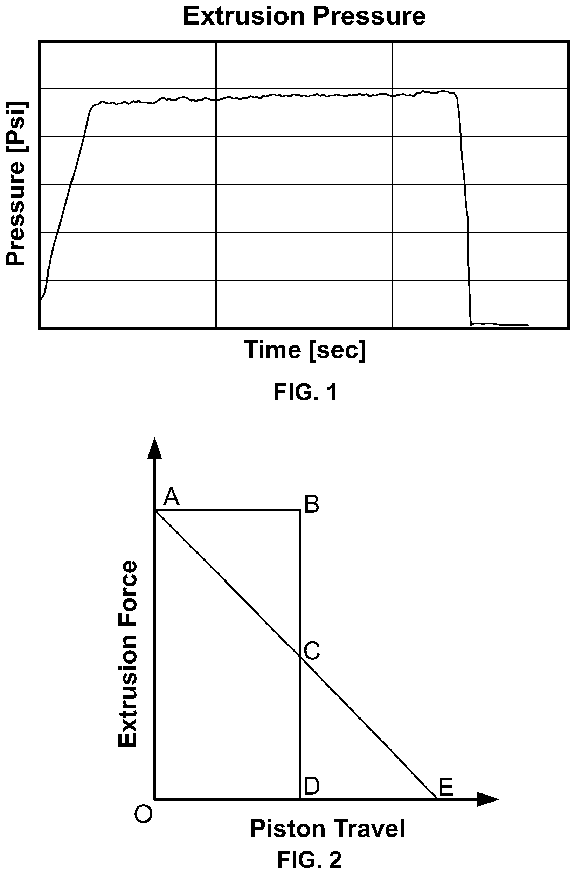

Referring now to FIG. 1 there is shown that the overall work required to extrude a plastic material is substantially constant (as used herein, "constant" work on an object, once that object exits a resting state, does not significantly change over time until the entire mass of material has been extruded). Thus if a single pressure force were to be efficiently used for extrusion, it would need to match this overall amount of work.

In the diagram of FIG. 2, the necessary extrusion work is the area of the rectangle ABDO. If a properly loaded spring is added to the system, the energy stored in the spring will be the area of the triangle AOE. The work to pre-load the spring (that will not be released into the system) is the area of the triangle CDE.

The work defined by the area of the polygon ACDO is stored in the spring during the insertion of the cartridge of cold dental filling material into the extruder. During the insertion, the cartridge deforms the spring from point D (pre-load) to point O (maximum spring deformation). (Hereinafter, "GP" will, in the alternative, designate the dental filling material.)

By comparing the two areas ABDO and ACDO respectively, it is evident that, to fully extrude the melted GP in the cartridge, the motor needs to provide only the work defined by the area of the triangle ABC, the rest being provided by the energy stored in the deformed spring.

The work performed by a deforming spring however, is represented by the polygon defined by the area ACDO, whose upper boundary has a negative slope indicating that over time the work it performs decreases. As a result, if a proper spring (as used herein, "proper" means never substantially in excess of what is needed to extrude the material) were used to provide extrusion work, over time it would provide a decreasing proportion of the overall required work.

Because of the gross mismatch between the energy required for extrusion of the entire dental material and the amount of energy stored and released by the spring, it is unexpected that spring alone should be useful as the power source for extruding dental filling materials.

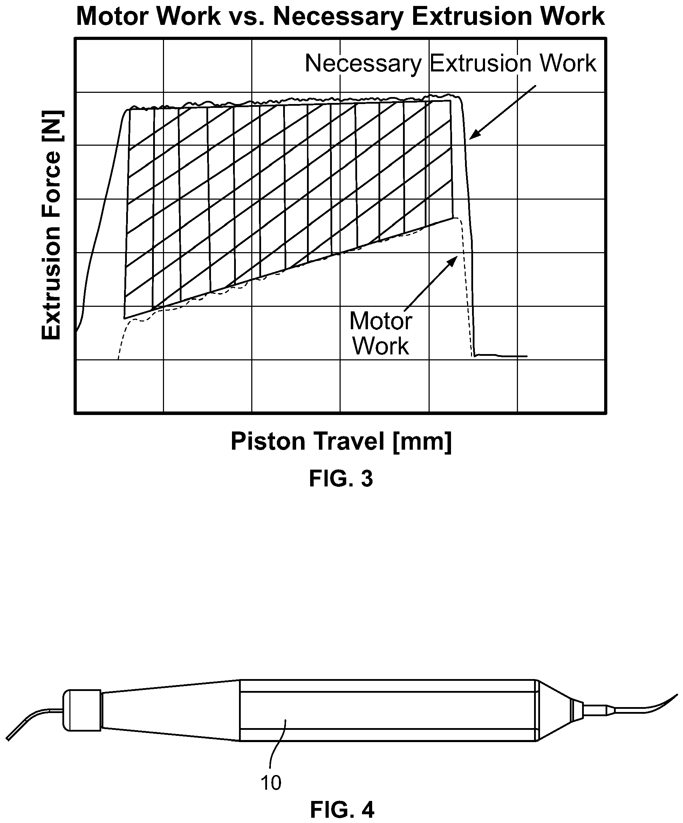

However, as illustrated in FIG. 3, if a spring is used to supplement the work performed by a motor, an unexpected result occurs. Because of the presence of the spring, the motor delivers the necessary work in a non-constant manner, cumulatively inverse to the work performed by the spring, the net of the two resulting in a constant force efficiently aligned to match the required constant overall work. Moreover, by combining the two energy sources, the spring provides a significant savings to the amount of work that must be performed by the motor. For example, FIG. 3 illustrates a scenario where the spring reduces by 75% the amount of work that must be performed by the motor.

For purposes of this application, as used herein, the term "spring" refers to an apparatus loaded to be biased to deform, inflate, or contract, and thereby impart an elastic or compressive force. While the most common spring configuration is in the form of a spring-loaded helix, any and all biased apparatuses, pneumatics, and/or solid or fluid materials, are also encompassed by the term spring as well *mutatis mutandis.* Springs are often constructed out of metal but they may comprise and/or consist of other materials as well.

The reduction in needed motor work resulting from the presence of a motor supplemented by a spring causes a number of efficiencies of particular benefit in endodontic contexts. This allows for the avoidance of otherwise deleterious trade-offs which plague dental practice.

Because tooth canals are by definition very small and may take on extremely irregular shapes, it is highly desired that material dispensing devices be cordless. Cordless devices facilitate positioning in a wide variety of rapidly changing extrusion angles and vectors to consistently match those irregularities. This desire is augmented by the fact that to properly obturate the tooth, the extruder must undergo many position changes over an extended period of time. This rules out the desirability of using large cumbersome batteries or power cords to power extrusion devices.

Unfortunately this arrangement is diametrically offset by the fact that extrusion is, by its nature, an energy intensive process which often drains cordless batteries all too quickly. Even worse, interruptions due to battery failure, recharging, and/or replacement, risk impairing the effectiveness of the obturation process by introducing voids caused by interruptions in the material application.

These conflicts are further compounded when thermal energy is applied to enhance the plastic properties of the material. Current material application techniques used today include lateral condensation, as well as warm vertical condensation and thermoplastic injection obturation techniques (TIOT). The latter two of these techniques use thermal energy to increase the plasticity of the material by heating or melting the material. Increased plasticity improves obturation because the less viscous material flows better and more readily fills the three-dimensional volumes of the canals (especially lateral canals). However, thermal energy also imposes further energy costs on the power source(s). As a result, scarcity of energy imposes unwanted trade-off in prior art extrusion processes between the various constituents of good obturation technique.

In contrast, by using spring work to supplement motor work, less battery power is required for extrusion. This frees up additional battery power to be used to extend the time of extrusion and/or for the application of thermal energy or other actions, without the use of cumbersome power cords or larger batteries. In essence the energy innate to spring loading operates as a second non-cumbersome reservoir of portable energy for the apparatus.

In at least one embodiment, the spring work provides between 1% and 99%, or more, or less, of the overall work required for extrusion. In at least one embodiment, the motor work provides between 1% and 99%, or more, or less, of the overall work required for extrusion. In at least one embodiment, the overall work required for extrusion consumes between 1% and 99%, or more, or less, of the capacity of the battery of an extrusion device. In at least one embodiment, the thermal energy added to the material consumes between 1% and 99%, or more, or less, of the capacity of the battery of an extrusion device. In addition, the spring power or motor power may make up to as much or as little as 100% or 0% of the overall work at a given point in time.

Referring now to FIGs. 4-7 there are shown illustrations of various possible arrangements of extrusion devices making use of the combination of motor work combined with spring work. While in these figures electric motors of a particular type are described, it is understood that other motors and other types of electric motors in particular, may be used as well. These other types may further include any battery or other electric module or power source known in the art. Also, while in these illustrations the extruded material is displayed in the form of a gutta percha pellet (27), other materials and forms may be used as well. Additionally, although the piston (37) makes use of an elastomeric plug (25) to contact the material, this item is only optional. Finally, many spring types and arrangements other than the illustrated helical spring (34) may be used.

In at least one embodiment an apparatus comprises a material cartridge (20) and an extruder (30). The extruder (30) includes the power source(s) for extruding the material (such as a gutta percha pellet (27)). The material cartridge (20) comprises the mechanisms for directing the flow of the material when it is extruded. The extruder includes a power train (40) having an electric motor (42) and a speed reducer (41).

The extruder body (31) is firmly attached to a speed reducer (42). The speed reducer may serve the purpose of properly coordinating the work performed by the motor with the work performed by the spring. The rotary motion of the speed reducer (42) output shaft is transmitted to a leadscrew (33), (which may be co-axially located) inside the extruder body (31), through a dowel pin (43). When the leadscrew (33) rotates, driven by the speed reducer (42) the leadscrew's nut (32) moves longitudinally. The dowel pin (35) is press-fitted into the nut (32) and passes through slots (39) machined into the extruder body (31). This prevents the rotary movements of the nut. During the extrusion process, the leadscrew's nut (32) is in contact with the extruder piston (37). The leadscrew (33), the leadscrew's nut (32), and the piston (37) may all be co-axially located inside an extruder body (31). A compression spring (34) located outside the extruder body (31), interacts with the extruder piston (37) via the compression washer (36) and dowel pin (38). The dowel pin (38) is press-fitted in the extruder piston (37) and symmetrically protrudes through the slots (39) of the extruder body 31.

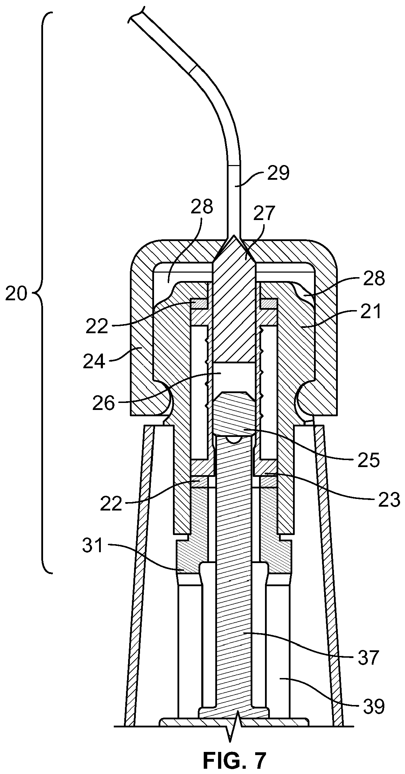

With reference to FIG. 7, the cartridge attachment (21) is screwed on the threaded end of the extruder body (31), and held inside the heater (23). Washers (22) prevent direct thermal contact of the heater (23) with the cartridge attachment (21) and extruder body (31). The elastomeric plug (25), is in contact with the extruder piston (37) and closes one end of the cartridge reservoir (26) containing the GP pellet (27). The other end of the cartridge reservoir (26) communicates with a needle dispenser (29). The cartridge sleeve (24) is centered to the cartridge reservoir (26), and engages the helical grooves (28) machined into the cartridge attachments (21), and pushes the cartridge reservoir (26) inside the heater (23), locking it in position. In at least one embodiment this is accomplished with less than one full rotation. When locked in position, the elastomeric plug (25) pushes the extruder piston (37) against the spring (34) via a dowel pin (38) and compression washer (36), forcing the spring (34) to its maximum deformation state.

While the description, and the FIGs., set forth herein relate to a threaded engagement (via helical grooves) between the cartridge sleeve (24) and the cartridge attachment (21), other embodiments are possible. For example, the engagement between the cartridge sleeve (24) and the cartridge attachment (21) may alternatively include a lever (not shown) that enables a user to engage the cartridge (26) into the heater (23) at the same time as the spring is being forced to its maximum deformation state.

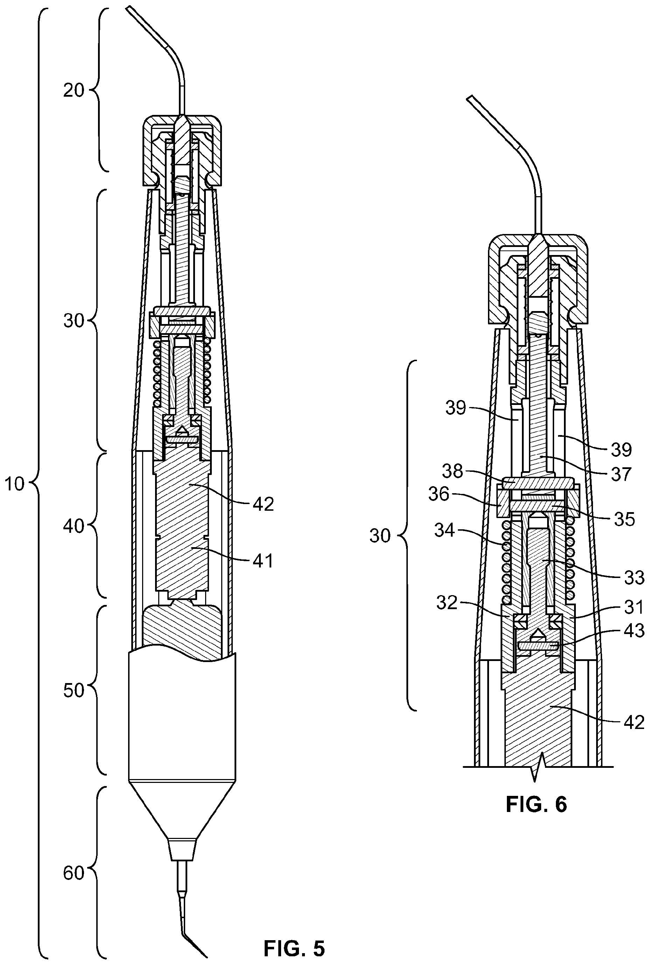

In the exemplary embodiments described herein, the spring (34) is designed to fit between the shoulder of the extruder body (31) (opposite the cartridge attachment (21) end (see FIG. 6) proximal the user) and the end of the slots (39). Once the pin (38) is inserted, the spring is preferably confined in-between these points -- i.e., the shoulder of the extruder body (31) and the end of the slots (39). In these exemplary embodiments, the spring compresses further when the cartridge is inserted (storing potential energy) and extends when extruding the gutta-percha (releasing the stored energy). The deformation of spring (34) from the fully-loaded state - i.e., after insertion of the cartridge - to a state which replicates the spring deformation prior to loading the cartridge - preferably equals the stroke necessary to empty the cartridge.

In at least one embodiment, the apparatus operates as follows: The GP cartridge is constructed and arranged to be inserted into and engaged to the extruder (30). In some embodiments, prior to insertion of the GP cartridge (20) into the extruder (30), the leadscrew's nut (32) may be positioned into a fully retracted position while the compression spring (34) is fully extended to a preload condition. This pre-load condition corresponds to point C on the diagram in FIG. 2. As a result, the extruder piston (37), pushed by the compression spring (34) via the compression washer (36) and the dowel pin (38), reaches its fully extended position and is no longer in contact with the leadscrew's nut (32).

During insertion of the GP cartridge into the heater (23) of the cartridge attachment (21), through rotation of the cartridge sleeve (24), the elastomeric plug (25) pushes the extruder piston (37) backward, forcing the compression spring (34) to its maximum deformation state corresponding to point A on the diagram FIG. 2. At this point the extruder piston (37) and leadscrew's nut (32) are in contact and the GP cartridge (20) is locked in position. In at least one embodiment this is because the GP pellet (27) is in its solid state condition and thereby opposes the spring's force on the elastomeric plug (25) via extruder piston (37).

After powering the heater (23), the melted GP in the cartridge reservoir (26) starts to flow, into a needle dispenser (29), under the pressure generated by the compression spring (34) via the extruder piston (37) and elastomeric plug (25). The flow through the dispenser (29) stops when the hydraulic resistance force of the flow equals the force provided by the compression spring. At this moment the system is in stand-by mode and consistent GP flow through the needle dispenser (29) can restart only by powering the electric motor.

In at least one embodiment the apparatus further comprises a down-packing tip. Down-packing is the process of applying compressive waves on the filling material in the RC. The waves may be continuous. The wave may be periodic. A down-packing tip is a device constructed and arranged to apply force which generates such compressive waves.

The dental filling material may comprise one item selected from the group consisting of: camphorquinone curable material, gutta percha, trans-poly isoprene material, rubber, thermoplastic, gold, silver, titanium, magnesium silicate, latex, zinc oxide, barium sulfate, mineral wax, bioceramic material, mineral trioxide aggregate (MTA), and any combination thereof.

While this invention may be embodied in many different forms, there are described in detail herein specific preferred embodiments of the invention. The present disclosure is an exemplification of the principles of the invention and is not intended to limit the invention to the particular embodiments illustrated. All patents, patent applications, scientific papers, and any other referenced materials mentioned herein are incorporated by reference in their entirety. Furthermore, the invention encompasses any possible combination of some or all of the various embodiments described herein and/or incorporated herein. In addition the invention encompasses any possible combination that also specifically excludes any one or some of the various embodiments described herein and/or incorporated herein.

The above disclosure is intended to be illustrative and not exhaustive. This description will suggest many variations and alternatives to one of ordinary skill in this art. All these alternatives and variations are intended to be included within the scope of the claims where the term "comprising" means "including, but not limited to". Those familiar with the art may recognize other equivalents to the specific embodiments described herein which equivalents are also intended to be encompassed by the claims.

All ranges and parameters disclosed herein are understood to encompass any and all subranges subsumed therein, and every number between the endpoints. For example, a stated range of "1 to 10" should be considered to include any and all subranges between (and inclusive of) the minimum value of 1 and the maximum value of 10; that is, all subranges beginning with a minimum value of 1 or more, (e.g. 1 to 6.1), and ending with a maximum value of 10 or less, (e.g. 2.3 to 9.4, 3 to 8, 4 to 7), and finally to each number 1, 2, 3, 4, 5, 6, 7, 8, 9, and 10 contained within the range. All percentages, ratios and proportions herein are by weight unless otherwise specified.

This completes the description of the preferred and alternate embodiments of the invention. Those skilled in the art may recognize other equivalents to the specific embodiment described herein which equivalents are intended to be encompassed by the claims attached hereto.

Further aspects and embodiments are disclosed in the following numbered items:
1. An apparatus comprising an extrusion piston, the piston being co-axial with a reservoir, the piston being constructed and arranged to move longitudinally along an axis of the reservoir in the direction of a dispenser in fluidic communication with the reservoir, wherein a motor driven actuator is in mechanical communication with the piston and a pre-loaded spring is in mechanical communication with the piston.
2. The apparatus of item 1 wherein both the pre-loaded spring and the motor driven actuator are constructed and arranged to impart mechanical force, at least in part, coaxial to the axis.
3. The apparatus of item 1 wherein the motor is a motor selected from the group consisting of: electrical motor, wired electrical motor, cordless electrical motor, battery powered electrical motor, rechargeable battery powered electrical motor, and any combination thereof.
4. The apparatus of item 1 wherein the reservoir and dispenser are positioned within a first element and at least one of the spring, motor driven actuator, or spring and motor driven actuator are positioned within a second element, and the first and second elements are releasably engaged to each other.
5. The apparatus of item 1 further comprising a dental filling material positioned between the piston and the dispenser.
6. The apparatus of item 1 further comprising a thermal element constructed and arranged to heat dental filling material positioned between the piston and the dispenser.
7. The apparatus of item 6 wherein the thermal element is constructed and arranged to heat a pre-determined mass of dental filling material positioned between the piston and the dispenser to a pre-determined temperature, wherein when the temperature of the mass of dental filling material is below the pre-determined temperature, the sum of the forces applied by the spring plus the motor driven actuator is insufficient to push the mass into the dispenser, but when the temperature of the mass of dental filling material meets or exceeds the pre-determined temperature, the sum of the forces is sufficient to push the mass through the dispenser.
8. The apparatus of item 1 wherein the dispenser is a syringe cylinder through which the material is extruded.
9. The apparatus of item 1 further comprising a data output in informational communication with at least one item selected from the group consisting of: the reservoir, the spring, the motor driven actuator, a battery, and any combination thereof, the data output constructed and arranged to display one or more properties of the one or more items that vary as the piston applies mechanical force.
10. The apparatus of item 1 further comprising at least one down-pack tip orthogonal to the dispenser.
11. The apparatus of item 10 wherein the down-pack tip and the motor driven actuator share at least one common power source.
12. The apparatus of item 10 further comprising a control element and a thermal element, the thermal element constructed and arranged to have a setting for heating a mass of dental filling material at one or more pre-determined temperatures, the down-pack tip constructed and arranged to have a setting to generate compressive waves of one or more wavelengths, the motor driven actuator optionally constructed and arranged to have a setting for applying pressing force at one or more levels of intensity, the control element constructed and arranged to allow an operator to select the specific setting of one or more of the thermal element, down-pack tip, and the motor driven actuator.
13. A method of extrusion, the method comprising the step of extruding a plastic mass through a dispenser via an overall pressing force applied to a piston, the overall pressing force being a combination of at least two non-constant forces.
14A. The method of item 13 wherein a decreasing force is supplied by a spring and an increasing force is supplied by a motor.
14B. The method of item 13 wherein the combination of the at least two non-constant forces includes a decreasing force supplied by a spring and an increasing force supplied by a motor.
15. The method of item 14 wherein the force of the motor is substantially the inverse of the force of the spring and the sum of their forces equals a substantially constant force.
16A. The method of item 13 wherein the extrusion is used to apply a dental filling material to a tooth.
16B. The method of item 13 wherein the plastic mass is a dental filling material.
17A. A method of filling a root canal with a filling material, the method including extruding a plastic mass through a dispenser via an overall pressing force applied to a piston, the overall pressing force being a combination of at least two forces, the method comprising:
   using a deformed spring to supply a first force of the at least two forces, the spring being deformed using a loading process; and
   using a motor to supply a second force of the at least two forces.
17B. A method of extruding a plastic mass through a dispenser via an overall pressing force applied to a piston, the overall pressing force being a combination of at least two forces, the method comprising:
   using a deformed spring to supply a first force of the at least two forces, the spring being deformed using a loading process; and
   using a motor to supply a second force of the at least two forces.
18. The method of item 17A or 17B wherein the force of the motor is substantially the inverse of the force of the spring and the sum of the force of the motor and the force of the spring equals a substantially constant force.
19. A method of manufacturing an extruder, said extruder for filling a root canal with a filling material by extruding a plastic mass through a dispenser via an overall pressing force applied to a piston, the overall pressing force being a combination of at least two forces, a first force of the at least two forces being provided by a spring and a second force of the at least two forces being provided by a motor, the method comprising:
   inserting the spring in the extruder; and
   pre-loading the spring within the extruder prior to charging a cartridge for use with the extruder.
20. A method of manufacturing an extruder, said extruder for extruding a plastic mass through a dispenser via an overall pressing force applied to a piston, the overall pressing force being a combination of at least two forces, a first force of the at least two forces being provided by a spring and a second force of the at least two forces being provided by a motor, the method comprising:
   inserting the spring in the extruder; and
   pre-loading the spring within the extruder prior to charging a cartridge for use with the extruder.

## Claims

1. An apparatus comprising an extrusion piston, the piston being co-axial with a reservoir, the piston being constructed and arranged to move longitudinally along an axis of the reservoir in the direction of a dispenser in fluidic communication with the reservoir, wherein a motor driven actuator is in mechanical communication with the piston and a pre-loaded spring is in mechanical communication with the piston.

2. The apparatus of claim 1 wherein both the pre-loaded spring and the motor driven actuator are constructed and arranged to impart mechanical force, at least in part, coaxial to the axis.

3. The apparatus of claim 1 wherein the motor is a motor selected from the group consisting of: electrical motor, wired electrical motor, cordless electrical motor, battery powered electrical motor, rechargeable battery powered electrical motor, and any combination thereof.

4. The apparatus of claim 1 wherein the reservoir and dispenser are positioned within a first element and at least one of the spring, motor driven actuator, or spring and motor driven actuator are positioned within a second element, and the first and second elements are releasably engaged to each other.

5. The apparatus of claim 1 further comprising a dental filling material positioned between the piston and the dispenser.

6. The apparatus of claim 1 further comprising a thermal element constructed and arranged to heat dental filling material positioned between the piston and the dispenser.

7. The apparatus of claim 6 wherein the thermal element is constructed and arranged to heat a pre-determined mass of dental filling material positioned between the piston and the dispenser to a pre-determined temperature, wherein when the temperature of the mass of dental filling material is below the pre-determined temperature, the sum of the forces applied by the spring plus the motor driven actuator is insufficient to push the mass into the dispenser, but when the temperature of the mass of dental filling material meets or exceeds the pre-determined temperature, the sum of the forces is sufficient to push the mass through the dispenser.

8. The apparatus of claim 1 wherein the dispenser is a syringe cylinder through which the material is extruded.

9. The apparatus of claim 1 further comprising a data output in informational communication with at least one item selected from the group consisting of: the reservoir, the spring, the motor driven actuator, a battery, and any combination thereof, the data output constructed and arranged to display one or more properties of the one or more items that vary as the piston applies mechanical force.

10. The apparatus of claim 1 further comprising at least one down-pack tip orthogonal to the dispenser.

11. The apparatus of claim 10 wherein the down-pack tip and the motor driven actuator share at least one common power source.

12. The apparatus of claim 10 further comprising a control element and a thermal element, the thermal element constructed and arranged to have a setting for heating a mass of dental filling material at one or more pre-determined temperatures, the down-pack tip constructed and arranged to have a setting to generate compressive waves of one or more wavelengths, the motor driven actuator optionally constructed and arranged to have a setting for applying pressing force at one or more levels of intensity, the control element constructed and arranged to allow an operator to select the specific setting of one or more of the thermal element, down-pack tip, and the motor driven actuator.

13. A method of extrusion, the method comprising the step of extruding a plastic mass through a dispenser via an overall pressing force applied to a piston, the overall pressing force being a combination of at least two non-constant forces.

14. The method of claim 13 wherein the combination of the at least two non-constant forces includes a decreasing force supplied by a spring and an increasing force supplied by a motor.

15. The method of claim 14 wherein the force of the motor is substantially the inverse of the force of the spring and the sum of their forces equals a substantially constant force.
